(19) Europäisches Patentamt / European Patent Office / Office européen des brevets

(11) **EP 3 959 648 B1**

(12) **FASCICULE DE BREVET EUROPEEN**

(45) Date de publication et mention
de la délivrance du brevet:
**22.03.2023 Bulletin 2023/12**

(21) Numéro de dépôt: **20720814.1**

(22) Date de dépôt: **21.04.2020**

(51) Classification Internationale des Brevets (IPC):
**G06V 10/25** *(2022.01)*

(52) Classification Coopérative des Brevets (CPC):
**G06V 10/25**

(86) Numéro de dépôt international:
**PCT/EP2020/061096**

(87) Numéro de publication internationale:
**WO 2020/216747 (29.10.2020 Gazette 2020/44)**

(54) **PROCEDE DE DETECTION DE CIBLES**

VERFAHREN ZUR DETEKTION VON ZIELEN

METHOD FOR DETECTING TARGETS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.04.2019 FR 1904287**

(43) Date de publication de la demande:
**02.03.2022 Bulletin 2022/09**

(73) Titulaire: **Safran Electronics & Defense
75015 Paris (FR)**

(72) Inventeur: **MALTESE, Dominique
75015 PARIS (FR)**

(74) Mandataire: **Cabinet Le Guen Maillet
3, impasse de la Vigie
CS 71840
35418 Saint-Malo Cedex (FR)**

(56) Documents cités:
- WEI-HE DIAO ET AL: "IMAGE SEQUENCE MEASURES FOR AUTOMATIC TARGET TRACKING", PROGRESS IN ELECTROMAGNETICS RESEARCH, vol. 130, 21 août 2012 (2012-08-21), pages 447-472, XP055650634, DOI: 10.2528/PIER12050810
- DAVID E SCHMIEDER ET AL: "Detection Performance in Clutter with Variable Resolution", IEEE TRANSACTIONS ON AEROSPACE AND ELECTRONIC SYSTEMS, IEEE SERVICE CENTER, PISCATAWAY, NJ, US, vol. AES-10, no. 4, 1 juillet 1983 (1983-07-01), pages 622-630, XP011167070, ISSN: 0018-9251

**Description**

DOMAINE TECHNIQUE

L'invention concerne un procédé de détection de cible dans une image, un dispositif mettant en oeuvre ledit procédé, un programme d'ordinateur mettant en oeuvre ledit procédé, et des moyens de stockage pour stocker ledit programme d'ordinateur.

ETAT DE LA TECHNIQUE ANTERIEURE

Des méthodes utilisant une détection de cibles (« object détection » en terminologie anglo-saxonne) sont couramment utilisées pour effectuer des surveillances d'environnement, notamment dans les domaines aérien et maritime. Ces méthodes consistent à saisir au moins une image optronique de l'environnement et à rechercher dans chaque image des indices d'une présence d'une cible potentielle. Un exemple d'une telle méthode se trouve dans "Image sequence measures for automatic target tracking", par Wei-He Diao et al, dans PROGRESS IN ELECTROMAGNETICS RESEARCH, vol. 130, 21 août 2012 (2012-08-21), pages 447-472, DOI: 10.2528/PIER12050810.

Des procédés de détection de cible dans une image connus consistent à calculer des valeurs de rapport signal sur bruit (« Signal to Noise Ratio (SNR) » en terminologie anglo-saxonne) locales, puis de comparer chaque valeur de SNR locale à un seuil de détection prédéfini. Une cible est considérée comme détectée lorsqu'une valeur de SNR local est supérieure au seuil de détection.

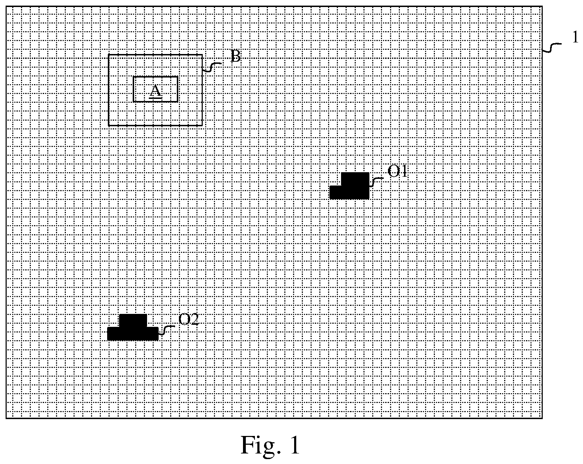

La **Fig. 1** illustre une mise en oeuvre d'un tel procédé sur une image 1 constituée d'une grille de pixels. L'image 1 comprend deux cibles O1 et O2. Pour détecter si au moins une cible est présente dans l'image 1, l'image est parcourue par un masque *A*. Un masque est un ensemble de pixels contenus dans une sous-partie de forme prédéfinie de l'image analysée. L'ensemble de pixels du masque comprend « 1 » ou une pluralité de pixels. Pour chaque position possible du masque dans l'image 1, une valeur moyenne $I_A$ des valeurs des pixels compris dans le masque *A* (par exemple, une valeur d'un pixel est une valeur de niveau de gris dudit pixel), une valeur moyenne $I_B$ et une valeur de variance $\sigma_B^2$ des valeurs des pixels dans un voisinage *B* autour du masque *A* sont calculées. Lorsque le masque comprend une pluralité de pixels, pour des raisons de charge calculatoire, la moyenne $I_A$ peut être aussi bien remplacée par la valeur d'un pixel central du masque *A*. Un voisinage prédéfini d'un masque est un ensemble de pixels contenus dans une sous partie de l'image analysée de forme prédéfinie située à proximité dudit masque. A partir de ces trois valeurs, pour chaque position possible du masque, une valeur de SNR est calculée de la manière suivante :

$$SNR = \frac{(I_A - I_B)}{\sigma_B}$$

On parle ici typiquement de détection de cible en contraste positif, *i.e.* il faut que la valeur de $I_A$ soit supérieure à celle de $I_B$ pour qu'un test de détection puisse s'appliquer. Une valeur de SNR peut aussi être calculée de la manière suivante:

$$SNR = \frac{|I_A - I_B|}{\sigma_B}$$

On parle ici typiquement de détection de cible en contraste positif ou négatif, *i.e.* le signe de la différence entre la valeur moyenne $I_A$ et la valeur moyenne $I_B$ importe peu.

La valeur de SNR obtenue est ensuite comparée au seuil de détection pour déterminer la présence ou pas d'une cible. Lorsque la valeur de SNR dépasse le seuil de détection, une détection, dite *détection initiale,* est déclarée. Lorsque le masque comprend un seul pixel, le pixel constitue la détection initiale. Lorsque le masque comprend une pluralité de pixels, le pixel central du masque constitue la détection initiale. Une labellisation (« labelling » en terminologie anglo-saxonne) est ensuite effectuée pour tenter de regrouper entre elles des détections initiales. Un objectif de la labellisation est de regrouper des détections initiales correspondant à une même cible. Le regroupement est réalisé selon des critères de proximité en position (typiquement, mise en oeuvre d'une connexité « 4 » ou « 8 »). Un regroupement de détections initiales constitue une détection aussi appelée *plot*.

D'un autre côté, il est connu qu'une cible peut évoluer dans un environnement variable. Un problème connu se produit lorsque, sur une image donnée, la cible se trouve sur un arrière-plan texturé, tel qu'un arrière-plan multimodal comprenant aux moins deux textures différentes.

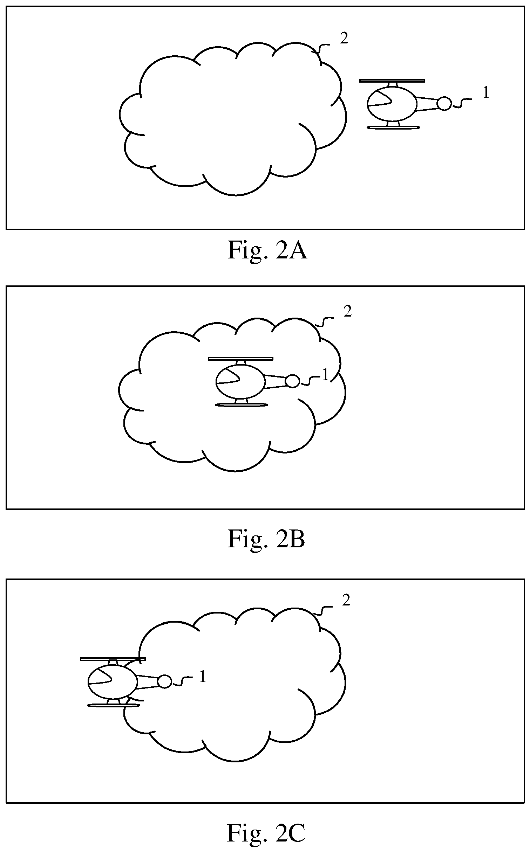

Les **Figs. 2A**, **2B** et **2C** représentent une image acquise par un dispositif optronique tel qu'une caméra (non représentée) dans laquelle un aéronef 1 évolue dans un environnement comportant un nuage 2. Lors de son évolution dans cet environnement, l'aéronef 1 passe successivement d'une zone sans nuage à une zone avec nuage, puis revient à une zone sans nuage. L'aéronef 1 est potentiellement une cible pouvant être détectée par un procédé de détection de cibles.

Dans les images représentées par les Figs. 2A et 2B, les pixels correspondant à l'aéronef 1 ont des caractéristiques (valeurs de luminance, valeurs de niveaux de gris, valeurs de SNR, ...) très différentes des pixels du voisinage de l'aéronef 1. On considère ici, pour simplifier, que le nuage est une zone quasi uniforme. On détecte alors sans difficulté une cible correspondant à l'aéronef 1 dans ces images, par exemple, par la méthode utilisant le masque *A* décrite plus haut. En effet, dans ce cas, lorsque le masque *A* est positionné sur l'aéronef 1, la valeur de SNR obtenue est supérieure au seuil de détection.

La Fig. 2C décrit une situation moins favorable. Dans l'image correspondant à la Fig. 2C, l'aéronef 1 se trouve en partie sur un fond correspondant au nuage 2 et en partie sur un fond correspondant au ciel. Dans ce cas, lorsque le masque *A* est positionné sur l'aéronef 1, la valeur de la variance $\sigma_B{}^2$ est élevée, ce qui a pour effet de diminuer la valeur de SNR obtenue. La valeur de SNR peut alors passer en dessous du seuil de détection. La Fig. 2C représente donc un cas typique de non détection d'une cible lorsque la cible se trouve sur un arrière-plan multimodal.

Il est souhaitable de pallier ces inconvénients de l'état de la technique. Il est notamment souhaitable de proposer une méthode qui permette de détecter une cible, que la cible soit située sur un arrière-plan monomodal ou sur un arrière-plan multimodal. Il est par ailleurs souhaitable de proposer une méthode qui soit simple à mettre en oeuvre et qui ait un coût calculatoire faible.

EXPOSE DE L'INVENTION

Selon un premier aspect de la présente invention, la présente invention concerne un procédé de détection d'une cible dans une image de pixels, chaque pixel étant représenté par une valeur de pixel, comprenant : obtenir une position d'un masque dans ladite image, ledit masque recouvrant au moins un pixel de ladite image ; obtenir un voisinage prédéfini de pixels autour dudit masque et découper ce voisinage en une pluralité de zones ; calculer, pour chaque paire possible de zones dudit voisinage, une valeur représentative d'une différence entre lesdites zones; si au moins une des valeurs représentatives d'une différence est supérieure à un premier seuil prédéterminé, déterminer qu'un arrière-plan du masque est de type multimodal et sinon, déterminer que ledit arrière-plan est de type monomodal ; calculer une variance $\sigma_B{}^2$ en utilisant une première formule de calcul lorsque ledit arrière-plan est de type monomodal et en utilisant une seconde formule de calcul lorsque ledit arrière-plan est de type multimodal ; calculer un rapport signal sur bruit pour la position du masque dont le bruit est estimé par la variance $\sigma_B{}^2$ calculée ; déterminer qu'une détection initiale d'une cible a été effectuée lorsque ledit rapport signal sur bruit est supérieur à un deuxième seuil prédéterminé ; et, appliquer une labellisation à chaque détection initiale pour tenter de former au moins un regroupement de détection initiale appelé plot à partir de détections initiales voisines selon un critère prédéfini parmi lesdites détections.

Lorsque l'arrière-plan du masque est de type monomodal, la formule de calcul de la variance $\sigma_B{}^2$ prend en compte pour chaque zone, une différence entre la moyenne des valeurs des pixels de ladite zone et une moyenne des valeurs des pixels dudit voisinage, et prend en compte la variance des valeurs des pixels de chaque zone du voisinage, et lorsque l'arrière-plan du masque est de type multimodal, la formule de calcul de la variance $\sigma_B{}^2$ prend en compte uniquement la variance des valeurs des pixels de chaque zone du voisinage.

La première formule de calcul est la suivante :

$$\sigma_B{}^2 = \frac{1}{N}\left(\sum_{i=1}^{N}\left(I_B^i - I_B\right)^2\right) + \frac{1}{N}\sum_{i=1}^{N}\sigma_B^{i\,2}$$

où *N* est le nombre de zones du voisinage, $I_B^i$ est la moyenne des valeurs des pixels d'une zone d'indice i du voisinage, $I_B$ est la moyenne des valeurs des pixels du voisinage, et $\left(\sigma_B^i\right)^2$ est la variance des valeurs des pixels de la zone d'indice *i* du voisinage et la seconde formule de calcul est la suivante :

$$\sigma_B{}^2 = \frac{1}{N}\sum_{i=1}^{N}\sigma_B^{i\,2}$$

Selon un mode de réalisation, une valeur représentative d'une différence entre deux zones est une valeur d'écart entre chacune des zones selon une loi du Qui$^2$ ($\chi^2$) :

$$\delta_{ij} = \frac{\left(I_B^i - I_B^j\right)^2}{\left(\left(\sigma_B^i\right)^2 + \left(\sigma_B^j\right)^2\right)}$$

ou $\delta_{ij}$ est une valeur d'écart entre une zone d'indice i et une zone d'indice j, $I_B^i$ est une valeur moyenne des valeurs des pixels de la zone d'indice i, $I_B^j$ est une valeur moyenne des valeurs des pixels de la zone d'indice j, $\left(\sigma_B^i\right)^2$ est une variance des valeurs des pixels de la zone d'indice i et $\left(\sigma_B^j\right)^2$ est une variance des valeurs des pixels de la zone d'indice j.

Selon un deuxième aspect de l'invention, l'invention concerne un dispositif de détection d'une cible dans une image de pixels, chaque pixel étant représenté par une valeur de pixel, comprenant : des moyens d'obtention pour obtenir une position d'un masque dans ladite image, ledit masque recouvrant au moins un pixel de ladite image ; des moyens d'obtention pour obtenir un voisinage prédéfini de pixels autour dudit masque et pour découper ce voisinage en une pluralité de zones ; des moyens de calcul pour calculer, pour chaque zone, une moyenne et une variance des valeurs des pixels de ladite zone ; des moyens de calcul pour calculer, pour chaque paire possible de zones dudit voisinage, une valeur représentative d'une différence entre lesdites zones; des moyens de détermination pour déterminer, si au moins une des valeurs représentatives d'une différence est supérieure à un premier seuil prédéterminé, qu'un arrière-plan du masque est de type multimodal et sinon, pour déterminer que l'arrière-plan du masque est de type monomodal ; des moyens de calcul pour calculer une variance $\sigma_B{}^2$ en utilisant une première formule de calcul lorsque ledit arrière-plan est de type monomodal et en utilisant une seconde formule de calcul lorsque ledit arrière-plan est de type multimodal, ladite première formule de calcul étant la suivante

$$\sigma_B{}^2 = \frac{1}{N}\left(\sum_{i=1}^{N}\left(I_B^i - I_B\right)^2\right) + \frac{1}{N}\sum_{i=1}^{N}\sigma_B^{i\,2}$$

où $N$ est le nombre de zones du voisinage, $I_B^i$ est la moyenne des valeurs des pixels d'une zone d'indice $i$ du voisinage, $I_B$ est la moyenne des valeurs des pixels du voisinage, et $\left(\sigma_B^i\right)^2$ est la variance des valeurs des pixels de la zone d'indice $i$ du voisinage et ladite seconde formule de calcul étant la suivante :

$$\sigma_B{}^2 = \frac{1}{N}\sum_{i=1}^{N}\sigma_B^{i\,2}$$

; des moyens de calcul pour calculer un rapport signal sur bruit pour la position du masque dont le bruit est estimé par la variance $\sigma_B{}^2$ calculée ; des moyens de détection pour déterminer qu'une détection initiale d'une cible a été effectuée lorsque ledit rapport signal sur bruit est supérieur à un deuxième seuil prédéterminé ; et, des moyens de labellisation pour appliquer une labellisation à chaque détection initiale pour tenter de former au moins un regroupement de détections initiales appelé plot à partir de détections initiales voisines selon un critère prédéfini parmi lesdites détections initiales.

Selon un troisième aspect de l'invention, l'invention concerne un programme d'ordinateur, comprenant des instructions pour mettre en oeuvre, par un dispositif, le procédé selon le premier aspect, lorsque ledit programme est exécuté par un processeur dudit dispositif. Selon un quatrième aspect, l'invention concerne des moyens de stockage stockant un programme d'ordinateur comprenant des instructions pour exécuter, par un dispositif, le procédé selon le premier aspect, lorsque ledit programme est exécuté par un processeur dudit dispositif.

BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

[Fig. 1] illustre une méthode de détection de cible dans une image ;
[Fig. 2A] illustre schématiquement une première image acquise par un dispositif optronique tel qu'une caméra (non représentée) dans laquelle un aéronef évolue dans un environnement comportant un nuage ;
[Fig. 2B] illustre schématiquement une deuxième image de l'aéronef acquise par le dispositif optronique ;
[Fig. 2C] illustre schématiquement une troisième image de l'aéronef acquise par le dispositif optronique ;
[Fig. 3A] illustre schématiquement un équipement apte à mettre en oeuvre l'invention ;
[Fig. 3B] illustre schématiquement une architecture matérielle d'un module de traitement apte à mettre en oeuvre l'invention ;
[Fig. 4] illustre schématiquement un procédé de détection de cibles dans une image selon l'invention ;
[Fig. 5A] illustre schématiquement un premier exemple de voisinage $B$ découpé en quatre zones ;
[Fig. 5B] illustre schématiquement le premier exemple de voisinage $B$ découpé en six zones ; et,
[Fig. 5C] illustre schématiquement un deuxième exemple de voisinage $B$ découpé en quatre zones.

EXPOSE DETAILLE DE MODES DE REALISATION

L'invention est décrite par la suite dans un contexte de surveillance aérienne utilisant un dispositif d'acquisition d'images faisant des acquisitions d'images dans un domaine visible. L'invention pourrait tout aussi bien s'appliquer dans des contextes de surveillance différents tels que la surveillance maritime. Par ailleurs, l'invention s'applique à d'autres types d'images (*i.e.* d'autres domaines spectraux) telles que les images infra-rouges, les images thermiques et les images radar.

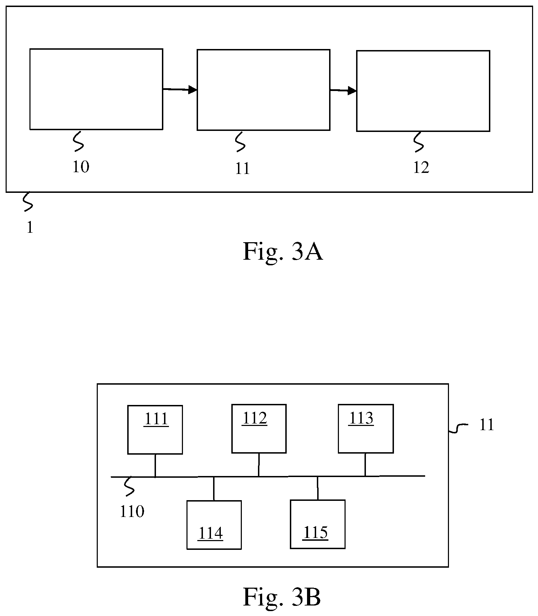

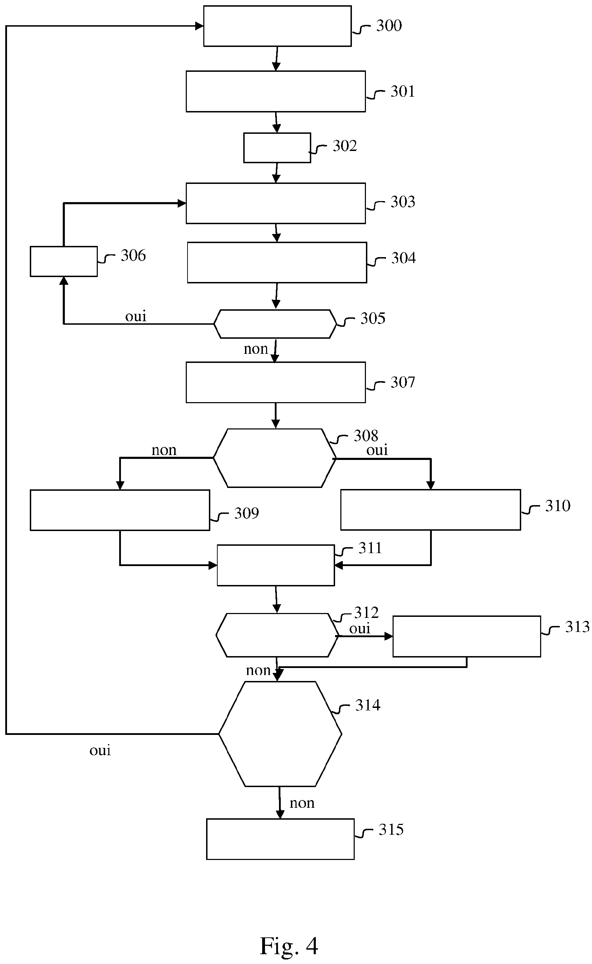

La **Fig. 3A** illustre schématiquement un équipement 1 apte à mettre en oeuvre l'invention. L'équipement 1 comprend un module d'acquisition d'images 10 tel qu'une caméra opérant dans le domaine spectral du visible. Le module d'acquisition d'images 10 fournit les images qu'il a acquises à un module de traitement 11. Le module de traitement d'images 11 est apte, entre autres, à détecter des cibles dans chaque image selon le procédé de l'invention décrit par la suite en relation avec la Fig. 4.

Le module de traitement 11 fournit des informations représentatives de chaque cible détectée à un module d'affichage 12, tel qu'un écran, qui affiche cette information pour qu'elle puisse être utilisée par un opérateur. Par exemple, le module de traitement 11 fournit au module d'affichage 12 une information représentative d'une position de chaque cible détectée dans une image acquise. Dans un autre mode de réalisation, les informations représentatives de chaque cible détectée fournie par le module de traitement d'images 11 peuvent aussi être utilisées en entrée d'un module de filtrage spatio-temporel appelé *pistage* (« tracking » dans la terminologie anglo-saxonne), utilisé pour réduire une fausse alarme système (bruit thermique, artefacts) tout en enrichissant les détections (cibles) d'informations représentatives d'une cinématique ou d'un comportement apparent desdites détections.

On considère que l'équipement 1 forme un système optronique.

Dans la Fig. 3A, les modules d'acquisition d'images 10, de traitement 11, et d'affichage 12 sont représentés comme faisant partie d'un même équipement 1. Dans un mode de réalisation, ces modules pourraient aussi être compris dans des équipements ou des dispositifs différents comprenant chacun un module de communication leur permettant de communiquer les uns avec les autres. Ces équipements ou dispositifs forment alors un système optronique apte à mettre en oeuvre l'invention.

La **Fig. 3B** illustre schématiquement un exemple d'une architecture matérielle du module de traitement.

Selon l'exemple d'architecture matérielle représenté à la Fig. 3B, le module de traitement 11 comprend alors, reliés par un bus de communication 110 : un processeur ou CPU (« Central Processing Unit » en anglais) 111 ; une mémoire vive RAM (« Random Access Memory » en anglais) 112 ; une mémoire morte ROM (« Read Only Memory » en anglais) 113 ; une unité de stockage telle qu'un disque dur ou un lecteur de support de stockage, tel qu'un lecteur de cartes SD (« Secure Digital » en anglais) 114 ; au moins une interface de communication 115 permettant au module de traitement 11 de communiquer avec le module d'acquisition d'images 10 et le module d'affichage 12.

Le processeur 111 est capable d'exécuter des instructions chargées dans la RAM 112 à partir de la ROM 113, d'une mémoire externe (non représentée), d'un support de stockage (tel qu'une carte SD), ou d'un réseau de communication. Lorsque l'équipement 1 est mis sous tension, le processeur 111 est capable de lire de la RAM 112 des instructions et de les exécuter. Ces instructions forment un programme d'ordinateur causant l'exécution complète ou partielle, par le processeur 111, du procédé décrit ci-après en relation avec la Fig. 4.

Le procédé décrit en relation avec la Fig. 4 peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais).

La **Fig. 4** illustre schématiquement un procédé de détection de cibles dans une image selon l'invention.

Le procédé est exécuté pour chaque image acquise par le module d'acquisition d'images 10. Une image en cours de traitement par l'équipement 1 est appelée image courante par la suite. Nous supposons par la suite que le module d'acquisition d'images 10 génère des images où chaque pixel comprend une composante, tel que par exemple, une image en niveaux de gris.

Un masque $A$ est défini pour parcourir l'image courante en utilisant un algorithme de parcours. Dans un mode de réalisation, le masque $A$ correspondant à un rectangle de pixels de l'image courante ayant une hauteur sur un axe vertical de l'image courante égale à un nombre $V$ de pixels et une largeur sur un axe horizontal de l'image courante égale à un nombre $H$ de pixels.

Un exemple d'algorithme de parcours consiste à parcourir l'image courante avec le masque $A$ par lignes horizontales. Chaque ligne horizontale correspond à une bande de pixels de l'image courante de hauteur égale au nombre $V$ et de largeur égale à la largeur de l'image courante. Les lignes horizontales de l'image courante sont parcourues par exemple de la gauche vers la droite, et de haut en bas. Sur une ligne horizontale donnée, à chaque itération du procédé décrit en relation avec la Fig. 4, le masque avance d'un pixel.

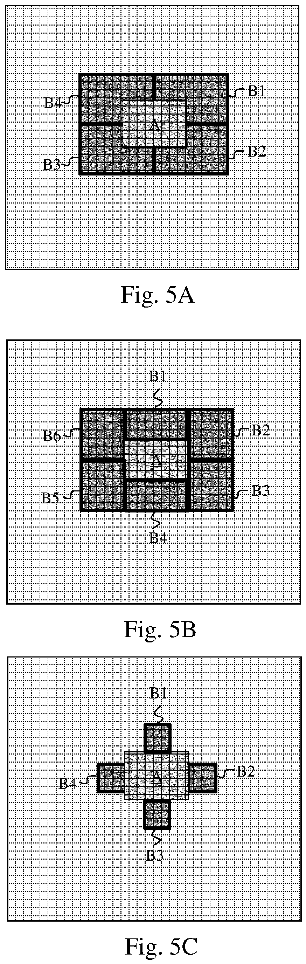

Dans une étape 300, le module de traitement 11 obtient une nouvelle position du masque A. Lors de la première itération du procédé de la Fig. 4, le module de traitement 11 obtient une position du masque $A$ correspondant au coin en haut à gauche de l'image courante. Dans une étape 301, le module de traitement 11 obtient un voisinage prédéfini $B$ de pixels autours du masque $A,$ et découpe ce voisinage B en un nombre $N$ de zones. Plusieurs voisinages $B$ et, pour chaque voisinage, plusieurs découpages en $N$ zones sont possibles. La **Fig. 5A** illustre schématiquement un premier exemple de voisinage $B$ découpé en quatre zones. Dans cet exemple, le voisinage $B$ forme une couronne rectangulaire autour du masque $A$.

La **Fig. 5B** illustre schématiquement le premier exemple de voisinage $B$ décrit en relation avec la Fig. 5A, mais cette fois-ci découpé en six zones.

La **Fig. 5C** illustre schématiquement un deuxième exemple de voisinage $B$ découpé en quatre zones de formes identiques. Dans cet exemple, le voisinage B comprend quatre parties disjointes réparties au-dessus, en dessous, à droite et à gauche du masque $A$, chaque partie correspondant à une zone.

Dans une étape 302, le module de traitement 11 initialise une variable *n* à « 1 », la variable *n* servant à parcourir chaque zone du voisinage *B*.

Dans une étape 303, le module de traitement 11 calcule une moyenne $I_B^n$ des valeurs des pixels de la zone numéro *n* du voisinage *B*.

Dans une étape 304, le module de traitement 11 calcule une variance $(\sigma_B^n)^2$ des valeurs des pixels de la zone numéro *n* du voisinage *B*.

Dans une étape 305, le module de traitement 11 vérifie que toutes les zones du voisinage *B* ont été traitées. Pour ce faire, si la variable *n* est inférieure ou égale à *N,* le module de traitement 11 passe à une nouvelle zone du voisinage *B* en incrémentant la variable *n* d'une unité lors d'une étape 306. L'étape 306 est alors suivie de l'étape 303.

Lorsque la variable *n* égale *N+1*, l'étape 305 est suivie d'une étape 307.

Dans l'étape 307, le module de traitement 11 calcule pour chaque paire possible de zones du voisinage *B*, une valeur représentative d'une différence entre lesdites zones. Dans un mode de réalisation, une valeur représentative d'une différence entre deux zones est une valeur d'écart $\delta_{ij}$ ($i \neq j$, $i \in [1, N]$, $j \in [1, N]$) entre chacune des zones selon une loi du Qui² ($\chi^2$).

$$\delta_{ij} = \frac{(I_B^i - I_B^j)^2}{\left((\sigma_B^i)^2 + (\sigma_B^j)^2\right)}$$

D'autres valeurs représentatives d'une différence seraient envisageables, telles qu'une somme des valeurs absolues des différences (Sum of Absolute Différence (SAD) en terminologie anglo-saxonne) ou une somme des différences au carré (Sum of Squared Différence (SSD) en terminologie anglo-saxonne) entre les valeurs des pixels des deux zones, lorsque les deux zones comparées ont des formes identiques.

Le module obtient alors $(N\text{-}1)(N/2)$ valeurs d'écart $\delta_{ij}$ différentes.

Dans une étape 308, chacune des $(N\text{-}1)(N/2)$ valeurs d'écart est comparée à un seuil prédéterminé *T2* afin de déterminer si l'arrière-plan du masque *A* est de type multimodal ou monomodal. Le seuil prédéterminé *T2* a été déterminé à partir d'une pluralité d'images d'entraînement comprenant des cibles sur des fond monomodaux ou multimodaux. Le seuil prédéterminé *T2* a été choisi de manière à distinguer automatiquement les cibles sur fonds monomodaux des cibles sur fonds multimodaux dans les images d'entraînement. Si au moins une des valeurs d'écart $\delta_{ij}$ est supérieure au seuil prédéterminé *T2*, le module de traitement 11 détermine que l'arrière-plan du masque *A* est de type multimodal et exécute une étape 310. Sinon, le module de traitement 11 considère que l'arrière-plan du masque A est de type monomodal et exécute une étape 309.

Lors de l'étape 309, le module de traitement 11 calcule une variance $\sigma_B^2$ des valeurs des pixels du voisinage *B* selon une formule exacte prenant en compte, pour chaque zone, une différence entre la moyenne $I_B^i$ des valeurs des pixels de ladite zone et une moyenne $I_B$ des valeurs des pixels du voisinage *B*, et la variance $(\sigma_B^i)^2$ des valeurs des pixels de chaque zone du voisinage *B*.

$$\sigma_B^2 = \frac{1}{N}\left(\sum_{i=1}^{N}\left(I_B^i - I_B\right)^2\right) + \frac{1}{N}\sum_{i=1}^{N}\sigma_B^{i\,2}$$

Lors de l'étape 310, le module de traitement 11 calcule une variance $\sigma_B^2$ selon une formule ne prenant pas en compte les moyennes $I_B^i$ et $I_B$, mais uniquement la variance $(\sigma_B^i)^2$ des valeurs des pixels de chaque zone du voisinage *B*. Ainsi, la variance calculée $\sigma_B^2$ est égale à la moyenne des variances $(\sigma_B^i)^2$.

$$\sigma_B^2 = \frac{1}{N}\sum_{i=1}^{N}\sigma_B^{i\,2}$$

Le module de traitement 11 adapte donc le calcul de la variance au type multimodal ou monomodal de l'arrière-plan du masque *A*. La formule de calcul de la variance $\sigma_B^2$ est en effet dépendante du type monomodal ou multimodal de l'arrière-plan du masque *A*. Dans une étape 311, le module de traitement 11 calcule la valeur du SNR pour la position courante du masque de la manière suivante :

$$SNR = \frac{(I_A - I_B)}{\sigma_B}$$

ou de la manière suivante :

$$SNR = \frac{|I_A - I_B|}{\sigma_B}$$

Ainsi, la valeur représentative de la variance $\sigma_B^2$ obtenue à l'étape 309 ou 310 est utilisée pour estimer le bruit dans le rapport signal sur bruit. Plus précisément, le bruit est égal à l'écart type $\sigma_B$.

Selon que l'on désire prendre en compte que des contrastes positifs ou des contrastes positifs et négatifs.

Dans un mode de réalisation $I_A$ est la valeur d'un pixel central du masque *A*.

Si la valeur du SNR est supérieure à un seuil de détection prédéterminé *T1*, lors d'une étape 312, le module de traitement 11 considère qu'une détection d'une cible a été effectuée. Le seuil prédéterminé *T1* a été déterminé à partir d'une pluralité d'images d'entraînement comprenant des cibles. Le seuil prédéterminé *T1* a été choisi de manière à distinguer automatiquement les cibles dans les images d'entraînement et à limiter un nombre de fausses détections.

Lorsqu'une détection d'une cible, dite *détection initiale,* a été effectuée, le module de traitement 11 exécute une étape 313 au cours de laquelle le module de traitement 11 conserve des informations représentatives de la détection initiale. Dans un mode de réalisation, l'information représentative de la détection initiale comprend des coordonnées dans l'image courante de la détection initiale.

Dans une étape 314, le module de traitement 11 détermine si toute l'image courante a été parcourue avec le masque *A* ou si d'autres positions possibles du masque n'ont pas encore été explorées. Si au moins une autre position reste à explorer, le module de traitement 11 retourne à l'étape 300. Si toute l'image courante a été parcourue, le module de traitement 11 exécute une étape 315.

Lors de l'étape 315, le module de traitement 11 applique une labellisation aux détections initiales effectuées dans l'image courante pour tenter de former des plots (*i.e.* des regroupements de détections) à partir de détections voisines selon un critère prédéfini parmi lesdites détections. Le critère prédéfini est par exemple un connexité « 4 » ou « 8 ». Suite à la labélisation, des informations représentatives de chaque plot sont transmises au module d'affichage 12. Les informations représentatives de chaque plot comprennent par exemple, l'image courante et une position de chaque plot.

Dans un mode de réalisation, le module de traitement 11 fournit ces informations représentatives de chaque plot à un module de pistage pour filtrer de la fausse alarme système et compléter les informations représentatives de chaque plot avec des informations représentatives d'une cinématique ou d'un comportement apparent dudit plot.

Dans un autre mode de réalisation, l'image courante pourrait être parcourue partiellement, par exemple, en parcourant intégralement une version réduite par sous-échantillonnage de l'image courante ayant une résolution inférieure à sa résolution initiale, puis en parcourant l'image courante dans sa résolution initiale uniquement au voisinage de plots éventuellement détectées dans la version réduite.

Dans un mode de réalisation, chaque image courante est une image multi-composantes, c'est-à-dire que chaque pixel comprend plusieurs composantes.

Dans ce cas, dans un mode de réalisation, le procédé décrit en relation avec la Fig. 4 est appliqué indépendamment sur chaque composante. Une cible est considérée comme détectée si à une position donnée du masque *A* au moins une valeur de SNR calculée à l'étape 312 dans une composante est supérieure au seuil de détection prédéterminé *T1*.

Dans un mode de réalisation, le masque *A* correspond à un pixel.

Dans un mode de réalisation, le procédé décrit en relation avec la Fig. 4 est répété pour plusieurs masques *A* différents et/ou pour plusieurs voisinages *B* différents. Une cible est considérée comme détectée si à une position donnée d'un masque *A*, au moins une valeur de SNR calculée à l'étape 312 pour un des masques *A* considéré et/ou pour un des voisinages *B* considéré est supérieure au seuil de détection prédéterminé *T1*.

## Revendications

1. Procédé mis en oeuvre sur un dispositif de détection d'une cible dans une image de pixels, chaque pixel étant représenté par une valeur de pixels, **caractérisé en ce qu'**il comprend :

   - obtenir (300) une position d'un masque dans ladite image, ledit masque recouvrant au moins un pixel de ladite image ;
   - obtenir (301) un voisinage prédéfini de pixels autour dudit masque et découper ce voisinage en une pluralité de zones ;
   - calculer (307), pour chaque paire possible de zones dudit voisinage, une valeur représentative d'une différence entre lesdites zones ;
   - si au moins une des valeurs représentatives d'une différence est supérieure à un premier seuil prédéterminé, déterminer qu'un arrière-plan du masque est de type multimodal et sinon, déterminer que ledit arrière-plan est de type monomodal ;
   - calculer (308, 309, 310) une variance $\sigma_B{}^2$ en utilisant une première formule de calcul lorsque ledit arrière-plan est de type monomodal et en utilisant une seconde formule de calcul lorsque ledit arrière-plan est de type multimodal, ladite première formule de calcul étant la suivante :

$$\sigma_B{}^2 = \frac{1}{N}\left(\sum_{i=1}^{N}\left(I_B^i - I_B\right)^2\right) + \frac{1}{N}\sum_{i=1}^{N}\sigma_B^{i\,2}$$

   où *N* est le nombre de zones du voisinage, $I_B^i$ est la moyenne des valeurs des pixels d'une zone d'indice i du voisinage, $I_B$ est la moyenne des valeurs des pixels du voisinage, et $\left(\sigma_R^i\right)^2$ est la variance des valeurs des pixels de la zone d'indice $i$ du voisinage et

ladite seconde formule de calcul étant la suivante :

$$\sigma_B{}^2 = \frac{1}{N}\sum_{i=1}^{N}\sigma_B^{i\,2}$$

- calculer (311) un rapport signal sur bruit pour la position du masque dont le bruit est estimé par la variance $\sigma_B^2$ calculée ;
- déterminer (312, 313) qu'une détection initiale d'une cible a été effectuée lorsque ledit rapport signal sur bruit est supérieur à un deuxième seuil prédéterminé ; et,
- appliquer une labellisation à chaque détection initiale pour tenter de former au moins un regroupement de détections initiales appelé plot à partir de détections initiales voisines selon un critère prédéfini parmi lesdites détections initiales.

2. Procédé selon la revendication 1, **caractérisé en ce qu'**une valeur représentative d'une différence entre deux zones est une valeur d'écart entre chacune des zones selon une loi du Qui² ($\chi^2$) :

$$\delta_{ij} = \frac{(I_B^i - I_B^j)^2}{\left((\sigma_B^i)^2 + (\sigma_B^j)^2\right)}$$

où $\delta_{ij}$ est une valeur d'écart entre une zone d'indice $i$ et une zone d'indice $j$, $I_B^i$ est une valeur moyenne des valeurs des pixels de la zone d'indice $i$, $I_B^j$ est une valeur moyenne des valeurs des pixels de la zone d'indice $j$, $(\sigma_B^i)^2$ est une variance des valeurs des pixels de la zone d'indice $i$ et $(\sigma_B^j)^2$ est une variance des valeurs des pixels de la zone d'indice $j$.

3. Dispositif de détection d'une cible dans une image de pixels, chaque pixel étant représenté par une valeur de pixel, caractérisé en qu'il comprend :

- des moyens d'obtention pour obtenir (300) une position d'un masque dans ladite image, ledit masque recouvrant au moins un pixel de ladite image ;
- des moyens d'obtention pour obtenir (301) un voisinage prédéfini de pixels autour dudit masque et pour découper ce voisinage en une pluralité de zones ;
- des moyens de calcul pour calculer, pour chaque zone, une moyenne (303) et une variance (304) des valeurs des pixels de ladite zone ;
- des moyens de calcul pour calculer (307), pour chaque paire possible de zones dudit voisinage, une valeur représentative d'une différence entre lesdites zones ;
- des moyens de détermination pour déterminer, si au moins une des valeurs représentatives d'une différence est supérieure à un premier seuil prédéterminé, qu'un arrière-plan du masque est de type multimodal et sinon, pour déterminer que l'arrière-plan du masque est de type monomodal ;
- des moyens de calcul pour calculer (308, 309, 310) une variance $\sigma_B^2$ en utilisant une première formule de calcul lorsque ledit arrière-plan est de type monomodal et en utilisant une seconde formule de calcul lorsque ledit arrière-plan est de type multimodal, ladite première formule de calcul étant la suivante :

$$\sigma_B{}^2 = \frac{1}{N}\left(\sum_{i=1}^{N}\left(I_B^i - I_B\right)^2\right) + \frac{1}{N}\sum_{i=1}^{N}\sigma_B^{i\,2}$$

où $N$ est le nombre de zones du voisinage, $I_B^i$ est la moyenne des valeurs des pixels d'une zone d'indice $i$ du voisinage, $I_B$ est la moyenne des valeurs des pixels du voisinage, et $\left(\sigma_B^i\right)^2$ est la variance des valeurs des pixels de la zone d'indice $i$ du voisinage et

ladite seconde formule de calcul étant la suivante :

$$\sigma_B{}^2 = \frac{1}{N}\sum_{i=1}^{N}\sigma_B^{i\,2}$$

- des moyens de calcul pour calculer un rapport signal sur bruit (311) dont le bruit est estimé par la variance $\sigma_B^2$ calculée ;
- des moyens de détection pour déterminer qu'une détection initiale d'une cible a été effectuée (312, 313) lorsque ledit rapport signal sur bruit est supérieur à un deuxième seuil prédéterminé ; et,

- des moyens de labellisation pour appliquer une labellisation à chaque détection initiale pour tenter de former au moins un regroupement de détections initiales appelé plot à partir de détections initiales voisines selon un critère prédéfini parmi lesdites détections initiales.

**4.** Programme d'ordinateur, **caractérisé en ce qu'**il comprend des instructions pour mettre en oeuvre, par un dispositif (11), le procédé selon l'une quelconque des revendications 1 à 2, lorsque ledit programme est exécuté par un processeur dudit dispositif.

**5.** Moyens de stockage, **caractérisés en ce qu'**ils stockent un programme d'ordinateur comprenant des instructions pour exécuter, par un dispositif (11), le procédé selon l'une quelconque des revendications 1 à 2, lorsque ledit programme est exécuté par un processeur dudit dispositif.

**Patentansprüche**

**1.** Verfahren, das an einer Vorrichtung zur Detektion eines Ziels in einem Pixelbild durchgeführt wird, wobei jedes Pixel durch einen Pixelwert dargestellt wird, **dadurch gekennzeichnet, dass** es umfasst:

- Erhalten (300) einer Position einer Maske im Bild, wobei die Maske mindestens ein Pixel des Bildes verdeckt;
- Erhalten (301) einer vordefinierten Nachbarumgebung von Pixeln um die Maske und Zerschneiden dieser Nachbarumgebung in mehrere Zonen;
- Berechnen (307) eines Wertes, der für eine Differenz zwischen den Zonen repräsentativ ist, für jedes mögliche Paar von Zonen der Nachbarumgebung;
- wenn mindestens einer der Werte, die für eine Differenz repräsentativ sind, größer als ein erster vorgegebener Schwellenwert ist, Feststelen, dass ein Hintergrund der Maske vom multimodalen Typ ist, und andernfalls Feststellen, dass der Hintergrund vom monomodalen Typ ist;
- Berechnen (308, 309, 310) einer Varianz $\sigma_B{}^2$ durch Anwenden einer ersten Rechenformel, wenn der Hintergrund vom monomodalen Typ ist, und durch Anwenden einer zweiten Rechenformel, wenn der Hintergrund vom multimodalen Typ ist, wobei die erste Rechenformel die Folgende ist:

$$\sigma_B{}^2 = \frac{1}{N}\left(\sum_{i=1}^{N}\left(I_B^i - I_B\right)^2\right) + \frac{1}{N}\sum_{i=1}^{N}\sigma_B^{i}{}^2$$

wobei *N* die Anzahl der Zonen der Nachbarumgebung ist, *IB* der Mittelwert der Werte der Pixel einer Zone mit dem Index *i* der Nachbarumgebung ist, $I_B$ der Mittelwert der Werte der Pixel der Nachbarumgebung ist und $\left(\sigma_B^i\right)^2$ die Varianz der Werte der Pixel der Zone mit dem Index *i* der Nachbarumgebung ist und die zweite Rechenformel die Folgende ist:

$$\sigma_B{}^2 = \frac{1}{N}\sum_{i=1}^{N}\sigma_B^{i}{}^2$$

- Berechnen (311) eines Signal-Rausch-Verhältnissees für die Position der Maske, deren Rauschen durch die berechnete Varianz $\sigma_B{}^2$ geschätzt wird;
- Feststellen (312, 313), dass eine initiale Detektion eines Ziels durchgeführt wurde, wenn das Signal-Rausch-Verhältnis größer als ein zweiter vorgegebener Schwellenwert ist; und
- Anbringen einer Kennzeichnung an jede initiale Detektion, um zu versuchen, mindestens eine Neugruppierung initialer Detektionen, Plot genannt, auf Grundlage benachbarter initialer Detektionen unter den initialen Detektionen nach einem vordefinierten Kriterium zu bilden.

**2.** Verfahren nach Anspruch 1, **dadurch gekennzeichnet, dass** ein Wert, der für eine Differenz zwischen zwei Zonen repräsentativ ist, ein Wert für den Abstand zwischen jeder der Zonen nach dem Chi-Quadrat-Gesetz ($\chi^2$) ist:

$$\delta_{ij} = \frac{\left(I_B^i - I_B^j\right)^2}{\left(\left(\sigma_B^i\right)^2 + \left(\sigma_B^j\right)^2\right)}$$

wobei $\delta_{ij}$ ein Wert für den Abstand zwischen einer Zone mit dem Index *i* und einer Zone mit dem Index *j* ist, $I_B^i$ ein Mittelwert der Werte der Pixel der Zone mit dem Index *i* ist, $I_B^j$ ein Mittelwert der Werte der Pixel der Zone mit dem Index *j* ist, $\left(\sigma_B^i\right)^2$ eine Varianz der Werte der Pixel der Zone mit dem Index *i* ist und $\left(\sigma_B^j\right)^2$ eine Varianz der Werte der Pixel der Zone mit dem Index *j* ist.

3. Vorrichtung zur Erkennung eines Ziels in einem Pixelbild, wobei jedes Pixel durch einen Pixelwert dargestellt ist, **dadurch gekennzeichnet, dass** sie umfasst:

- Erhaltensmittel zum Erhalten (300) einer Position einer Maske im Bild, wobei die Maske mindestens ein Pixel des Bildes verdeckt;
- Erhaltensmittel zum Erhalten (301) einer vordefinierten Nachbarumgebung von Pixeln um die Maske und Zerschneiden dieser Nachbarumgebung in mehrere Zonen;
- Rechenmittel zum Berechnen eines Mittelwertes (303) und einer Varianz (304) der Pixelwerte der Zone für jede Zone;
- Rechenmittel zum Berechnen (307) eines Wertes, der für eine Differenz zwischen den Zonen repräsentativ ist, für jedes mögliche Paar von Zonen der Nachbarumgebung;
- Feststellungsmittel zum Feststellen, dass, wenn mindestens einer der Werte, die für eine Differenz repräsentativ sind, größer als ein erster vorgegebener Schwellenwert ist, ein Hintergrund der Maske vom multimodalen Typ ist, und andernfalls zum Feststellen, dass der Hintergrund vom monomodalen Typ ist;
- Rechenmittel zum Berechnen (308, 309, 310) einer Varianz $\sigma_B{}^2$ durch Anwenden einer ersten Rechenformel, wenn der Hintergrund vom monomodalen Typ ist und durch Anwenden einer zweiten Rechenformel, wenn der Hintergrund vom multimodalen Typ ist, wobei die erste Rechenformel die Folgende ist:

$$\sigma_B{}^2 = \frac{1}{N}\left(\sum_{i=1}^{N}\left(I_B^i - I_B\right)^2\right) + \frac{1}{N}\sum_{i=1}^{N}\sigma_B^{i\,2}$$

wobei *N* die Anzahl der Zonen der Nachbarumgebung ist, *IB* der Mittelwert der Werte der Pixel einer Zone mit dem Index *i* der Nachbarumgebung ist, $I_B$ der Mittelwert der Werte der Pixel der Nachbarumgebung ist und $\left(\sigma_B^i\right)^2$ die Varianz der Werte der Pixel der Zone mit dem Index *i* der Nachbarumgebung ist und die zweite Rechenformel die Folgende ist:

$$\sigma_B{}^2 = \frac{1}{N}\sum_{i=1}^{N}\sigma_B^{i\,2}$$

- Rechenmittel zum Berechnen eines Signal-Rausch-Verhältnisses (311), dessen Rauschen durch die berechnete Varianz $\sigma_B{}^2$ geschätzt wird;
- Detektionsmittel zum Feststellen, dass eine initiale Detektion eines Ziels durchgeführt wurde (312, 313), wenn das Signal-Rausch-Verhältnis größer als ein zweiter vorgegebener Schwellenwert ist; und
- Kennzeichnungsmittel zum Anbringen einer Kennzeichnung an jede initiale Detektion, um zu versuchen, mindestens eine Neugruppierung initialer Detektionen, Plot genannt, auf Grundlage benachbarter initialer Detektionen unter den initialen Detektionen nach einem vordefinierten Kriterium zu bilden.

4. Computerprogramm, **dadurch gekennzeichnet, dass** es Anweisungen zum Durchführen des Verfahrens nach einem der Ansprüche 1 bis 2 durch eine Vorrichtung (11) umfasst, wenn das Programm durch einen Prozessor der Vorrichtung ausgeführt wird.

5. Speicherungsmittel, **dadurch gekennzeichnet, dass** sie ein Computerprogramm speichern, das Anweisungen zum Durchführen des Verfahrens nach einem der Ansprüche 1 bis 2 durch eine Vorrichtung (11) umfasst, wenn das Programm durch einen Prozessor der Vorrichtung ausgeführt wird.

**Claims**

1. Method, implemented on a device, for detecting an object in an image of pixels, each pixel being represented by a pixel value, **characterised in that** it comprises:

- obtaining (300) a position of a mask in said image, said mask covering at least one pixel of said image;
- obtaining (301) a predefined neighbourhood of pixels around said mask and dividing this neighbourhood into a plurality of zones;
- calculating (307), for each possible pair of zones of said neighbourhood, a value representing a difference between said zones;
- if at least one of the values representing a difference is above a first predetermined threshold, determining that a background of the mask is of the multimode type, and otherwise determining that said background is of the monomode type;
- calculating (308, 309, 310) a variance $\sigma_B{}^2$ using a first calculation formula when said background is of the monomode type and using a second calculation formula when said background is of the multimode type, said first calculation formula being as follows:

$$\sigma_B{}^2 = \frac{1}{N}\left(\sum_{i=1}^{N}\left(I_B^i - I_B\right)^2\right) + \frac{1}{N}\sum_{i=1}^{N}\sigma_B^i{}^2$$

where $N$ is the number of zones of the neighbourhood, $I_B^i$ is the mean of the values of the pixels of a zone of index $i$ of the neighbourhood, $I_B$ is the mean of the values of the pixels of the neighbourhood, and $(\sigma_B^i)^2$ is the variance of the values of the pixels of the zone of index $i$ of the neighbourhood, and

said second calculation formula being as follows

$$\sigma_B{}^2 = \frac{1}{N}\sum_{i=1}^{N}\sigma_B^i{}^2$$

- calculating (311) a signal to noise ratio for the position of the mask the noise of which is estimated by the variance $\sigma_B^2$ calculated;
- determining (312, 313) that an initial detection of an object has been made when said signal to noise ratio is above a second predetermined threshold; and
- applying a labelling to each initial detection to attempt to form at least one grouping of initial detections called a plot from neighbouring initial detections according to a predefined criterion from said initial detections.

2. Method according to claim 1, **characterised in that** a value representing a difference between two zones is a difference value between each of the zones according to a $\chi^2$ law:

$$\delta_{ij} = \frac{\left(I_B^i - I_B^j\right)^2}{\left((\sigma_B^i)^2 + (\sigma_B^j)^2\right)}$$

where $\delta_{ij}$ is a difference value between a zone of index $i$ and a zone of index $j$, $I_B^i$ is a mean value of the values of the pixels of the zone of index $i$, $I_B^j$ is a mean value of the values of the pixels of the zone of index j, $(\sigma_B^i)^2$ is a variance of the values of the pixels of the zone of index $i$ and $(\sigma_B^j)^2$ is a

variance of the values of the pixels of the zone of index $j$.

3. Device for detecting an object in an image of pixels, each pixel being represented by a pixel value, **characterised in that** it comprises:

- obtaining means for obtaining (300) a position of a mask in said image, said mask covering at least one pixel of said image;
- obtaining means for obtaining (301) a predefined neighbourhood of pixels around said mask and dividing this neighbourhood into a plurality of zones;
- calculation means for calculating, for each zone, a mean (303) and a variance (304) of the values of the pixels of said zone;
- calculation means for calculating (307), for each possible pair of zones of said neighbourhood, a value representing a difference between said zones;
- determination means for determining, if at least one of the values representing a difference is above a first predetermined threshold, that a background of the mask is of the multimode type, and otherwise determining that said background is of the monomode type;
- calculation means for calculating (308, 309, 310) a variance $\sigma_B^2$ using a first calculation formula when said background is of the monomode type and using a second calculation formula when said background is of the multimode type, said first calculation formula being as follows:

$$\sigma_B{}^2 = \frac{1}{N}\left(\sum_{i=1}^{N}\left(I_B^i - I_B\right)^2\right) + \frac{1}{N}\sum_{i=1}^{N}\sigma_B^i{}^2$$

where $N$ is the number of zones of the neighbourhood, $I_B^i$ is the mean of the values of the pixels of a zone of index $i$ of the neighbourhood, $I_B$ is the mean of the values of the pixels of the neighbourhood, and $(\sigma_B^i)^2$ is the variance of the values of the pixels of the zone of index $i$ of the neighbourhood, and

said second calculation formula being as follows:

$$\sigma_B{}^2 = \frac{1}{N}\sum_{i=1}^{N}\sigma_B^i{}^2$$

- calculation means for calculating a signal to noise ratio (311) the noise of which is estimated by the variance $\sigma_B^2$ calculated;

- detection means for determining that an initial detection of an object has been made (312, 313) when said signal to noise ratio is above a second predetermined threshold; and

- labelling means for applying a labelling to each initial detection to attempt to form at least one grouping of initial detections called a plot from neighbouring initial detections according to a predefined criterion from said initial detections.

4. Computer program, **characterised in that** it comprises instructions for implementing, by a device (11), the method according to either one of claims 1 to 2, when said program is executed by a processor of said device.

5. Storage means, **characterised in that** they store a computer program comprising instructions for executing, by a device (11), the method according to any one of claims 1 to 2, when said program is executed by a processor of said device.

Fig. 1

Fig. 2A

Fig. 2B

Fig. 2C

Fig. 3A

Fig. 3B

Fig. 4

Fig. 5A

Fig. 5B

Fig. 5C

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **WEI-HE DIAO et al.** Image sequence measures for automatic target tracking. *PROGRESS IN ELECTROMAGNETICS RESEARCH,* 21 Août 2012, vol. 130, 447-472